(19) **Europäisches Patentamt European Patent Office Office européen des brevets**

(11) **EP 4 675 508 A1**

(12) **EUROPEAN PATENT APPLICATION**

(43) Date of publication:
07.01.2026 Bulletin 2026/02

(21) Application number: 25187952.4

(22) Date of filing: 07.07.2025

(51) International Patent Classification (IPC):
**G06N 5/01** (2023.01)   **G06N 5/025** (2023.01)
**G06N 20/00** (2019.01)

(52) Cooperative Patent Classification (CPC):
**G06N 5/01; G06N 5/025; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.07.2024 PT 2024119576**

(71) Applicant: **Feedzai - Consultadoria e Inovação Tecnológica, S.A.**
**3030-199 Coimbra (PT)**

(72) Inventors:
• **SILVA MARTINS, JOÃO LUCAS**
**3030-199 COIMBRA (PT)**
• **SIMÕES BRAVO FERREIRA, JOÃO GUILHERME**
**3030-199 COIMBRA (PT)**
• **LEAL GOMES, ANA SOFIA**
**3030-199 COIMBRA (PT)**
• **SANTOS RODRIGUES BIZARRO, PEDRO GUSTAVO**
**3030-199 COIMBRA (PT)**

(74) Representative: **Patentree**
**Edificio Net**
**Rua de Salazares, 842**
**4149-002 Porto (PT)**

(54) **METHOD AND DEVICE FOR GENERATING AND UPDATING A RULE-BASED CLASSIFIER**

(57) Computer-implemented method for generating and updating a rule-based classifier, for verification of data records of a dataset, each said data record corresponding to an event of a computer system, from an initial ruleset stored in a non-volatile memory of a data verification computer system, the method comprising: receiving a training dataset wherein the training dataset comprises a plurality of data records and, if existing, corresponding classification labels; splitting the training dataset into an induction dataset and a selection dataset; applying the initial ruleset to each of the plurality of data records of the induction dataset for classifying, when applicable, the data records; automatically generating a candidate ruleset from non-classified and labelled records; and applying the candidate ruleset to the selection dataset and iteratively selecting a rule from the candidate ruleset that provides the highest classification precision to the selection dataset, until a stopping criterium or criteria is reached.

Fig. 1

EP 4 675 508 A1

**Description**

**TECHNICAL FIELD**

The present disclosure relates to a computer-implemented method and device for generating and updating a rule-based classifier, for verification of data records, parts of said disclosure being particularly apt for computationally efficient parallel processing by GPU or NPU, including automatic rule generation.

**BACKGROUND**

Rule systems are a type of expert system made to support or automate decision-making. Originally simple tools for binary decisions, they have evolved into sophisticated frameworks capable of handling complex, real-time predictions. Creating and updating these systems with new patterns requires significant domain expert knowledge, an issue that rule induction algorithms attempt to mitigate by inferring rules directly from data.

Despite the advent of modern Machine Learning (ML) algorithms, rule systems continue to be important in many domains [1, 20]. Their simplicity and interpretability, often requirements in high stake problems, as well as their longstanding presence have earned the trust for the performance of various tasks. Many continue to use rule systems as their only solution for certain high-stake tasks which typically require low False Positive Rate (FPR) requirements, namely detection of non-conformant transactions, while others use them alongside ML models.

However, building rule sets traditionally requires expert input and their predictive performance is typically worse than modern ML models. This could potentially be attributed, at least in part, to the fact that rules are not automatically inferred from data, but instead manually created and tuned.

While there are several induction algorithms that infer rules from data [17, 4, 19, 20, 16, 13, 10, 5, 6], in certain cases, applying these algorithms or methods can be problematic when there is an extreme class imbalance and a requirement to have very low FPR values, e.g., under 2%. The latter is necessary as incorrectly flagging legitimate instances can cause issues for manufacturing, logistics and service operations, and putting undue pressure on manual reviewers - when there is a high cost associated with an incorrect positive detection.

Another requirement is to induce rules that are easily understood by experts, for two reasons: firstly, experts often need to review the decision made by a rule, and, as such, they must understand the reason behind it; secondly, experts need to manually modify rules periodically to keep up with new patterns to be detected in large datasets, whether these are, for example, financial, or health care screening datasets.

Prior work on rule set induction can be divided into two distinct approaches. Separate-and-conquer algorithms, also known as covering algorithms, which form rule sets by adding rules one by one, until a stopping criterion is met [14, 15, 5, 18, 7, 9]. They typically rely on a heuristic to choose the best rule to add, removing all examples covered by that rule going forward.

On the other hand, divide-and-conquer algorithms such as ID3 [17], C4.5 [19] and Classification and Regression Trees (CART) [4], use decision trees to describe the data. These trees are grown in a greedy fashion, by iteratively splitting a current leaf node based on the value of one attribute, to maximize a chosen criterion, such as information gain. Fast Interpretable Greedy-Tree Sums (FIGS) [20] expands on these algorithms (namely CART) by introducing the option of adding a new tree by splitting on a new root node instead of an existing leaf node. This allows FIGS to flexibly model additive structures by simultaneously growing a sum of trees, rather than being constrained to a singular tree. At each iteration, FIGS chooses the best possible split across all current trees and adds a potential new tree, based on residuals rather than original labels. This helps avoid redundant splits and results in more compact, interpretable models. Each tree independently contributes to the model with a score that is summed to produce the final prediction.

Rule systems are composed of tens to hundreds of simple rules, each designed to capture a particular pattern. These rules are usually a conjunction of a small set of logical conditions that can be understood by a human and evolved with time by tuning specific thresholds. Transaction analysis systems (e.g., financial transactions, medical screening, etc.) are usually constrained to operate with an overall low False Positive Rate (FPR) or Alert Rate (AR). This is to limit the friction caused to users when interacting in a given manufacturing, logistical and service operation setting where a false positive carries high costs (e.g. considering a machine to be defective, when in fact it is not; considering a vehicle engine to be malfunctioning, when in fact it is not; or considering a device to be requiring a predictive maintenance operation, when in fact it is not yet required to do so), or to limit the total number of generated alerts when processing alerts has a comparatively high cost (e.g. when alerts must be manually checked).

Moreover, the automatic generation of rules, particularly the automatic updating of such automatically generated rules, requires significant computational resources, and prior art methods are not particularly well aligned with the capabilities and configurations of current computing hardware.

These facts are disclosed in order to illustrate the technical problem addressed by the present disclosure.

## GENERAL DESCRIPTION

The present disclosure relates to a computer-implemented method and device for generating and updating a rule-based classifier, for verification of data records, parts of said disclosure being particularly apt for computationally efficient parallel processing by GPU or NPU, including automatic rule generation.

The disclosed relates to a rule induction method that generates rules with a given user defined constraint, such as having an FPR below a user specified threshold.

The disclosure also presents the implementation of the disclosed method as development in the field of the FIGS [20] decision tree, and aims to create shorter and more interpretable rule sets when using the rule induction method disclosed herein. Binary tree generation using greedy iterative processing based upon Greedy-Tree Sums (FIGS) [20] is hereby incorporated by reference.

In an embodiment, a rule induction method is described, which dynamically generates a set of induced rules over time, thus being able to automatically capture new patterns.

In an embodiment, any of the disclosed methods are constrained to have a low false positive rate (FPR) or alert rate. Therefore, a rule induction method continuously and dynamically generates a low FPR rule set directly from decision trees. The disclosed experiments show that the induced rules are often able to maintain or improve performance of the original models for low FPR tasks, while substantially reducing their complexity and outperforming rules hand-tuned by experts.

The present disclosure relates to a method for generating and updating a rule-based classifier, for verification of data records of a dataset, each said data record corresponding to an event of a computer system, from an initial ruleset stored in a non-volatile memory of a data verification computer system, the method comprising the following steps:

> receiving a training dataset wherein the training dataset comprises a plurality of data records and, if existing, corresponding classification labels, i.e., not all received data records are necessarily labelled;
> splitting the training dataset into an induction dataset and a selection dataset;
> applying the initial ruleset to each of the plurality of data records of the induction dataset for classifying, when applicable, the data records, i.e., not all data records may be classified when applying the initial ruleset;
> automatically generating a candidate ruleset from non-classified and labelled records; and
> applying the candidate ruleset to the selection dataset and iteratively selecting a rule from the candidate ruleset that provides the highest classification precision to the selection dataset, until a stopping criterium or criteria is reached.

In an embodiment, the stopping criterium or criteria comprises obtaining an alert rate or a false positive rate, FPR, of the selected rule set and stopping the iterative rule selection if the obtained rate surpasses a predetermined maximum rate.

In an embodiment, the automatic generation of the candidate ruleset from non-classified and labelled records comprises the following steps:

> generating one or more decision trees by a greedy iterative processing of deciding on a tree split of a current tree node by discarding samples that fall into support of said current tree node, or fall into support of a current best leaf of another tree; and
> converting the generated one or more decision trees into the candidate ruleset.

In an embodiment, the initial ruleset is previously automatically generated from an initial training dataset by:

> generating one or more decision trees by a greedy iterative processing of deciding on a tree split of a current tree node by discarding samples that fall into support of said current tree node, or fall into support of a current best leaf of another tree; and
> converting the generated one or more decision trees into the initial ruleset.

An embodiment comprises the step of decision tree generation, wherein said decision tree generation is carried out in parallel.

In an embodiment, the method comprises the following steps:

> splitting the received training dataset into a plurality of induction datasets and a selection dataset;
> applying the initial ruleset to each of the plurality of data records of each of the plurality of induction datasets for classifying, when applicable, the data records;
> automatically generating a candidate ruleset from non-classified and labelled records, for each induction dataset of the plurality of induction datasets;

merging the generated candidate rulesets; and

applying the merged candidate rulesets to the selection dataset and iteratively selecting a rule from the merged candidate rulesets that provides the highest classification precision to the selection dataset, until a stopping criterium or criteria is reached.

In an embodiment, said automatic generation of a candidate ruleset for each induction dataset is carried out in parallel by GPU or NPU parallel processing, in particular, said automatic generation is by decision tree generation carried out in parallel by GPU or NPU parallel processing.

In an embodiment, said evaluation of the initial ruleset is carried out in parallel, and/or said evaluation of the candidate ruleset is carried out in parallel.

In an embodiment, said iterative rule selection from the candidate ruleset is carried out sequentially using cached rule or ruleset evaluations.

In an embodiment, said iterative rule selection from the candidate ruleset is carried out sequentially by CPU processing.

In an embodiment, the greedy iterative processing is based on "Fast interpretable Greedy-Tree Sums (FIGS)" by Tan, Y.S., Singh, C., Nasseri, K., Agarwal, A., Yu, B.:. CoRR abs/2201.11931 (2022) [20].

In an embodiment, the classification labels are binary (for example, labels are explicitly assigned for a first class value and a second class value is implicitly given when the first class value is not assigned).

It is also disclosed a computer device comprising a hardware-based computer processor and a non-volatile memory comprising computer program instructions, which when executed by the hardware-based computer processor, cause the hardware-based computer processor to carry out any of the disclosed methods.

It is also disclosed a computer program product embodied in a non-transitory computer-readable medium comprising computer program instructions, which when executed by a computer processor, cause the computer processor to carry out any of the disclosed methods.

## BRIEF DESCRIPTION OF THE DRAWINGS

The following figures provide preferred embodiments for illustrating the disclosure and should not be seen as limiting the scope of invention.

**Figure 1:** Schematic representation of an embodiment of the disclosed rule inferring method.

**Figure 2:** Schematic representation of an embodiment comprising an extraction of a set of rules from a decision tree.

**Figure 3:** Schematic representation of another embodiment also comprising an extraction of a set of rules from a decision tree.

## DETAILED DESCRIPTION

As described above, the present disclosure relates to a computer-implemented method and device for generating and updating a rule-based classifier, for verification of data records, parts of said disclosure being particularly apt for computationally efficient parallel processing by GPU or NPU, including automatic rule generation.

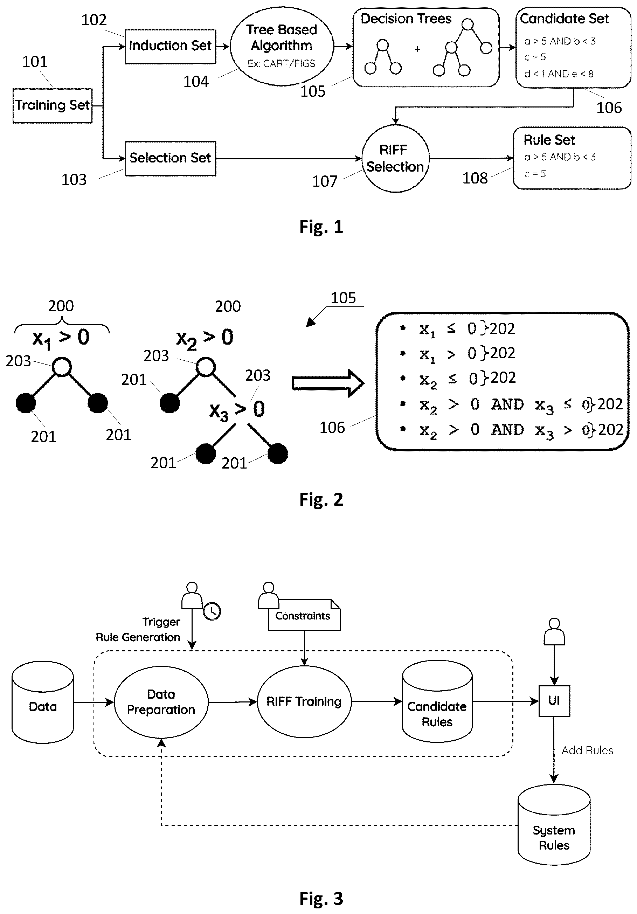

**Figure 1** shows a schematic representation of an embodiment of the disclosed rule inferring method where: **101** represents a labeled training set; **102** represents an induction set; **103** represents a selection set; **104** represents a method that generates decision trees from the data in the induction set; **105** represents the final decision trees obtained from the decision trees algorithm; **106** represents a candidate set of rules obtained from the decision trees; **107** represents the method for selecting the rules with optimal selection set performance; and **108** represents a final set of rules.

Decision tree algorithms, like CART, have formed the basis of state-of-the-art algorithms for tabular data, when used in ensembles such as Random Forests [3] or Gradient-Boosted Decision Trees [8]. However, even single decision trees can be hard to understand and interpreted by humans, and they are be manually tuned by experts. Thus, the disclosed method generates candidate rules with good discriminative performance. For this, this method is split into two steps, as shown in **Figure 1:**

a set of candidate rules, **106,** is generated from the leaves of a tree-based model, **105,** trained on an induction set, **101.** This candidate set, **106,** contains different rules with high precision, corresponding to leaves with high purity; and

the best performing rules, **108,** out of this candidate set are selected in a greedy fashion, based on their performance in an out-of-sample selection set, **107,** to yield a small set of rules that work well together.

The following pertains to Rule Induction from Decision Trees. In an embodiment, in order to generate a low FPR rule set, rules, **106,** are extracted from decision trees, **105.** This decision is based on the fact that the typical splitting criterion tries to find the purest leaves, i.e., leaves with highest precision that, in theory, maximize the amount of gained recall per FPR. For this reason, all rules in the extracted candidate set, **106,** are assumed to predict the *positive* class.

**Figure 2** shows a schematic representation of an embodiment comprising the extraction of a set of rules from a decision tree, where: **105** represent a schematic representation of a set of decision trees; **106** represents a set of candidate rules; **200** represents a decision tree of the aforementioned set of decision trees; **201** represents a leaf of a decision tree, wherein each leaf corresponds to a rule; **202** represents each rule extracted from each leaf; and **203** represents a root node of a decision tree.

After creating a tree with suitable high purity leaves, **201,** a candidate rule set, **106,** is formed by extracting one rule, **202,** for each leaf, **201.** This is accomplished by traversing the path from the root node, **203,** to each leaf **,201,** forming a new rule as a conjunction of the conditions from the node, **203,** along this path. **Figure 2** shows an example where a tree model with 5 leaves was converted to a rule set.

This method does not extend well to additive tree models like FIGS [20], because it ignores tree scores when converting leaves to decision rules. To choose the best split on a tree $i \in [T]$, **200,** FIGS uses a mean squared error criterion with residuals calculated by subtracting from the label the predictions from all other trees $j$, **200,** as targets. For a sample (**x**, $y$), the residual, $r_i$, for tree i is thus given by:

$$r_i(\mathbf{x}, y) = y - \sum_{j \in [T], j \neq i} \hat{y}_j(\mathbf{x}) \tag{1}$$

where $\hat{y}_j$ is the prediction for tree $j$. This additive approach means that leaves, **201,** generated by FIGS may not be pure enough to yield low FPR rules since they are meant to complement the predictions made by other trees, **200.**

For this reason, a modification of the FIGS algorithm is proposed by binarizing the residual computation, thus turning its Greedy Tree Sums into Greedy Tree Unions. Concretely, when considering how to split a current leaf node, **201,** in a tree $i$, **200,** one discards any samples that fall into the support of that node, if they are already covered by a current leaf node, **201,** of another tree $j$, **200,** i.e., a sample (**x**, y) is discarded when evaluating the splitting criterion if:

$$\bigvee_{j \in [T], j \neq i} \hat{y}_j(\mathbf{x}) = \text{true} \tag{2}$$

where $\hat{y}_j(x)$ is now a binary prediction for tree $j$, **200,** that evaluates to true if: 1) x falls into the support of a current leaf, **201,** in tree $j$, **200,** with high enough precision (as specified by a user provided threshold); 2) it falls into the support of the current best leaf, **201,** of tree $j$, **200,** as measured by precision. This modified version is henceforth named as Fast Interpretable Greedy-Tree Unions (FIGU).

The following pertains to Rule Selection. In an embodiment, the rule selection step, **107,** aims to distil a potentially large set of candidate rules into a smaller set, **108,** maximizing the number of captured positive examples, i.e., the True Positive Rate (TPR) of the system, while keeping its FPR, or Alert Rate, below a given threshold. Specifically, the following explanation will use the former constraint, FPR.

Writing as $\text{Cov}(\mathcal{R}; \mathcal{D}^+)$, the example set covered by a rule set $\mathcal{R}$ on dataset D, both the TPR and the FPR are respectively defined as:

$$\text{TPR}(\mathcal{R}) = \frac{|\text{Cov}(\mathcal{R}; \mathcal{D}^+)|}{|\mathcal{D}^+|},$$

$$\text{FPR}(\mathcal{R}) = \frac{|\text{Cov}(\mathcal{R}; \mathcal{D}^-)|}{|\mathcal{D}^-|},$$

where symbols $\mathcal{D}^+$ and $\mathcal{D}^-$ denote the subsets of positive and negative examples, respectively. One can thus formalize the rule selection goal as choosing a subset of rules $S$ from a given set of candidate rules C = $\{c_1, c_2, \cdots, c_n\}$, **106,** to solve:

$$TPR(S) \qquad s.t. \qquad \text{FPR}(S) \leq \text{FPR}_{\text{max}} \tag{3}$$

Both TPR and FPR are monotone non-decreasing submodular functions and this optimization problem is NP-hard [11]. A greedy heuristic algorithm is proposed, that iteratively selects rules with the highest precision in the remaining uncovered samples, 'D', until a stopping condition is met. In this case, the stopping criterium occurs when the FPR of the selected rule set surpasses $FPR_{max}$. One assumes that this always occurs over the runtime of the algorithm, i.e., that $FPR(C) \geq FPR_{max}$.

**Table 1:** Greedy Rule Selection Algorithm.

$$
\begin{aligned}
&\textbf{Input:}\ (C = c_1, c_2, \ldots, c_n);\ \text{FPR}_{\max};\ \mathcal{D} \\
&\mathcal{D}' \leftarrow \mathcal{D} \\
&S \leftarrow \{\} \\
&i \leftarrow 0 \\
&\textbf{while}\ \text{FPR}(S; \mathcal{D}) < \text{FPR}_{\max}\ \textbf{do} \\
&\quad i \leftarrow i + 1 \\
&\quad r_i \leftarrow \arg\max_{r \in C \setminus S} \text{Precision}(r; \mathcal{D}') \\
&\quad \mathcal{D}' \leftarrow \mathcal{D}' \setminus \text{cov}(r_i; \mathcal{D}') \\
&\quad S \leftarrow S \cup \{r_i\} \\
&\textbf{end while} \\
&\textbf{return}\ r_1, \ldots, r_i
\end{aligned}
$$

In an embodiment, the algorithm of **Table 1** returns a list of rules in the order they were selected. Defining $S_i := \{r_1, \cdots, r_i\}$, one has that $S_{l-1}$ is guaranteed to satisfy the $FPR_{max}$ constraint, whereas $S_l$ may violate it, with $l$ denoting the length of the returned list.

The algorithm of **Table 1** can avoid reevaluating the coverage, Cov($r_i$,D'), of all candidate rules $r_i \in C$, on every iteration by using caching. This implies calculating and storing all rule coverages before applying the selection step, and using these precomputed values to recalculate rule precision on each iteration.

In an embodiment, a comparison of rule sets with different FPR values generated from different candidate sets is done, and thus the solution set is relaxed to include randomized rule sets. Instead of a fixed subset S of the candidate set, **106,** a probability is outputted for every rule in C to be selected. All rules, except for the last rule, are thus selected with probability 1. However, for the last rule selected, $r_l$, this probability is chosen to match the expected FPR with the desired FPR constraint. Formally, the probability $\rho(c)$ for a rule $c \in C$ to be selected is:

$$
\rho(c) = \begin{cases}
1 & , c \in S_{l-1} \\
\dfrac{\text{FPR}_{\max} - \text{FPR}(S_{l-1})}{\text{FPR}(S_l) - \text{FPR}(S_{l-1})} & , c = r_l \\
0 & , c \notin S_l
\end{cases}
$$

In practical terms, this means that if a sample is only covered by the last rule, $r_l$, there is a probability $\rho(r_l)$ of it triggering, therefore influencing the system's decision. In other words, the rule is only checked for a random subset of examples. With this in mind, the TPR of this randomized rule system can be interpreted as a random variable with an expected value given by:

$$
\text{TPR}(\rho) = \big(1 - \rho(r_l)\big)\text{TPR}(S_{l-1}) + \rho(r_l)\text{TPR}(S_l)
$$

The following pertains to the Rule Induction System Architecture. **Figure 3** shows a schematic representation of another embodiment, comprising the extraction of a set of rules from a decision tree.

**Figure 3** shows another embodiment of the disclosed method. Much like a standard ML model, induction of new rules can be triggered periodically or manually to detect new patterns from data. This rule induction process is composed of different steps:

Data Preparation: In this step, training, validation and test sets are created out of historical data. These are temporally ordered, with the volume of data used for each one, as well as the ratio of positive cases in the training set, being configurable parameters. This step can be also configured to ignore data records already covered by the existing rule system, therefore encouraging the rule induction algorithm to capture patterns that are not yet covered.

RIFF Training: New rules are induced with the algorithm described in the previous sections. Relevant configurations for this step are the constraints to be used for the induction algorithm, such as that the total system alert rate must be kept below a desired amount.

Candidate Rules: After training, rules generated by RIFF are to be reviewed by experts in a user interface (UI), and potentially added to the system rules.

The following pertains to experiments of the disclosure. A benchmark of the disclosed method is done against state-of-the-art decision trees algorithms, namely the Classification and Regression Trees (CART) [4] and the Fast Interpretable Greedy-Tree Sums (FIGS) [20] algorithms, and against expert made rules. The disclosed experiments, shown herein as examples, use both publicly available and private real world transaction data, and we benchmark RIFF using trees generated by CART, FIGS and FIGU. Our results show that induced rule sets created by RIFF outperform a rule system hand-tuned by experts. Plus, RIFF's rules are shown to maintain or improve performance of the original decision tree models, while substantially reducing their complexity.

**Table 1:** Dataset Analysis Summary. The train/validation/test splits are time-based for the BAF and Industry datasets and random for Taiwan Credit

|  | BAF | Industry | Taiwan Credit |
|---|---|---|---|
| Task | Account Fraud | Transaction Fraud | Credit Card Default |
| Positive rate | 1% | 7% | 22% |
| # samples | 1M | 3.5M | 30K |
| # features | 32 | 113 | 25 |
| Train split | 75% | 60% | 60% |
| Validation and test split | 12.5% | 20% | 20% |

In an example, the disclosed method is evaluated on two public classification datasets: BAF [12], a synthetic bank account fraud dataset, and Taiwan credit [2], a credit card default dataset. We also use a private dataset, containing real transaction fraud data, which we cannot disclose due to privacy and contractual reasons. A baseline unique to this dataset is a set of rules manually tuned by data scientists allowing us to compare the rules generated by RIFF against rules handcrafted by experts. An overview of the used datasets can be seen in **Table 1.**

The training set is split into two smaller subsets: induction and selection. After using the induction set to train the disclosed method, as well as the CART and FIGS models, candidate rules are extracted from the generated tree models. The selection step of the algorithm is applied to extract the best rules from each candidate set according to their performance on the selection set. The validation set is then used to tune the total number of splits when training the decision tree model, using a line search over the values [10, 20, 30, 40, 50] and the test set for the final evaluation of the generated rule set.

The LightGBM module is used as a strong baseline for predictive performance as a state-of-the-art Machine Learning algorithm for tabular data. The performances of the best CART and FIGS models, trained in the induction step as divide-and-conquer baselines, are also reported.

**Table 2:** Recall at 1% FPR in the test split for BAF, Credit and Industry Datasets.

|  | BAF | Industry | Taiwan Credit |
|---|---|---|---|
| LightGBM | 0.252 | 0.531 | 0.084 |
| Expert Rules | - | 0.158 | - |
| CART | 0.160±0.005 | 0.315±0.075 | 0.063±0.009 |
| CART + RIFF | **0.184**±0.006 | **0.362**±0.027 | **0.139**±0.018 |
| FIGS | **0.210**±0.006 | **0.394**±0.032 | 0.067±0.016 |
| FIGS + RIFF | 0.158±0.016 | 0.311±0.018 | 0.136±0.019 |
| FIGU + RIFF | 0.155±0.010 | 0.382±0.039 | 0.104±0.007 |

**Table 3:** Generated Rule set length for BAF, Credit and Industry Datasets.

|  | BAF | Industry | Taiwan Credit |
|---|---|---|---|
| Expert Rules | - | 13.0 | - |
| CART + RIFF | $10.4 \pm 3.647$ | $17.8 \pm 4.087$ | $5.2 \pm 1.483$ |
| FIGS + RIFF | $8.0 \pm 1.732$ | $9.2 \pm 1.304$ | $7.6 \pm 1.949$ |
| FIGU + RIFF | **3.6**$\pm$0.548 | **3.4**$\pm$0.548 | **1.0**$\pm$0.000 |

This experimental setup is repeated using 5 different seeds for the model training and the sampling of the induction and selection sets. **Tables 2** and **3** report the average performance and average length of generated rule sets respectively, as well as the associated standard deviations. Interestingly, using RIFF on CART always improved its performance, a possible indication that CART was overfitting and RIFF reduced this by selecting its best rules. For the dataset with fewer samples, Taiwan Credit, RIFF increased the performance of CART and FIGS significantly, surpassing even LightGBM's performance. FIGU appears to generate rule sets that have similar performance to FIGS with much fewer rules, an indication that FIGU is able to reduce the overlap between generated trees, leading to shorter and, in theory, simpler to understand rule sets.

Parts of the present disclosure are also particularly apt for execution on a GPU - graphics processing unit (a specialized processor explicitly designed for executing graphical algorithms), NPU - neural processing unit (a specialized processor explicitly designed for executing machine learning algorithms), or any other inherently parallel processing unit. For example, models were run on a Linux PC with Intel Xeon CPU cores and a NVIDIA GeForce RTX. An exemplary embodiment can use GPU processing to generate decision trees, which was exemplified in reference for the case of XGBoost as a decision tree generation method [21].

The present disclosure further facilitates efficient implementation on parallel or artificial neural network specialized hardware architectures, including but not limited to Graphics Processing Units (GPUs), Neural Processing Units (NPUs), and other inherently parallel processing units. GPUs, characterized by a plurality of cores optimized for parallel execution of graphical or matrix-based computations, and NPUs, specifically tailored for the accelerated execution of machine learning algorithms, provide enhanced processing capabilities for the disclosure, in particular the disclosed models. In exemplary embodiments, the models were executed on a computing system comprising a Linux-based operating environment, Intel® Xeon® multi-core central processing units (CPUs), and a NVIDIA® GeForce® RTX-series GPU. The use of such parallel processing or neural network processing units enables a significant reduction in computational latency and an improvement in throughput for the training and induction stages of the disclosed methods. Significantly, the disclosed architecture is inherently suited for implementation by parallel processing or neural network processing units.

The application of a rule set comprises an evaluation step which comprises evaluating each rule of the ruleset (this entails verifying what is the result of each rule to be applied), and an action step where the evaluation is then used to perform an action like triggering another step or setting a class value. Evaluation of rules, and the actions taken, as with all other steps or actions described in this disclosure, are implemented in one or more embodiments using computer program instructions, which when executed by a given hardware-based computer processor, cause that computer processor to carry out any of the disclosed methods or comprise a computer device as recited in claims included at the end of this disclosure.

Consequently, the invention leverages the architectural advantages of parallel processing to achieve enhanced computational efficiency, scalability, and responsiveness, thereby addressing the technical problem of optimizing resource utilization in machine learning tasks such as rule generation and ruleset updating.

The present disclosure presents a rule induction system architecture that incorporates RIFF, a rule induction algorithm that builds low FPR rule sets for manufacturing, logistic and service operations by greedily extracting rules from a tree-based model like CART or FIGS, and also FIGU, a slight modification to FIGS that aims to lower decision tree complexity so that it can be used by the RIFF selection algorithm to generate shorter rulesets. The following method is benchmarked with real world data that shows that RIFF is able to perform better than expert rules, while maintaining the predictive performance of the original models and reducing their complexity.

A hardware-based computer processor, as used herein when referring to a computer processor, refers to any system, device, or apparatus capable of processing data in accordance with the methods described in this disclosure. The hardware-based computer data hardware-based processor may include one or more hardware-based processors, such as a central processing unit (CPU), a graphics processing unit (GPU), a digital signal processor (DSP), or any combination thereof. These hardware-based processors may be implemented as a single chip, a multi-core processor, a distributed computing system, or any other suitable configuration. For example, this can be a central processing unit (CPU), such as an Intel® Core™ i7 processor, and memory modules, including 16 GB of DDR4 RAM. The system may include a solid-state drive (SSD) for storage, an optional GPU (e.g., NVIDIA® GeForce RTX™ 3060), and runs a standard operating system, such as Microsoft® Windows® or Linux®. For example, this can be an embedded system utilizing a microcontroller, such as the ARM® Cortex®-M4 processor, with onboard memory (e.g., 1 MB of flash storage and 256 KB of SRAM). This system operates with real-time operating system (RTOS) software and can be integrated into an industrial device. For example, this can also be a cloud-based virtual machine hosted on a server infrastructure, such as an Amazon Web Services (AWS) EC2 instance, featuring virtual CPUs (vCPUs) based on Intel® Xeon® or AMD EPYC™ processors. The instance can be configured for example with 32 GB of RAM, 1 TB of elastic block storage (EBS), and executes server-side software The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

References

1. Aparício, D., Barata, R., Bravo, J., Ascensão, J.T., Bizarro, P.: ARMS: automated rules management system for fraud detection. CoRR abs/2002.06075 (2020).

2. Bache, K., Lichman, M.: UCI machine learning repository (2013), http://archive.ics.uci.edu/ml

3. Breiman, L.: Random forests. Machine Learning 45(1), 5-32 (Oct 2001). doi.org/10.1023/ A:1010933404324.

4. Breiman, L., Friedman, J.H., Olshen, R.A., Stone, C.J.: Classification and Regression Trees. Wadsworth (1984), lyle.smu.edu/~mhd/8331f06/cart.pdf.

5. Cendrowska, J.: Prism: An algorithm for inducing modular rules. International Journal of Man-Machine Studies 27(4), 349-370 (1987). doi.org/10.1016/50020-7373(87)80003-2.

6. Clark, P., Niblett, T.: The cn2 induction algorithm. Machine Learning 3, 261-283 (1989). doi.org/10.1023/A:1022641700528.

7. Cohen, W.W.: Fast effective rule induction. In: Prieditis, A., Russell, S. (eds.) Machine Learning Proceedings 1995, pp. 115-123. Morgan Kaufmann, San Francisco (CA) (1995). doi.org/10.1016/ B978-1-55860-377-6.50023-2.

8. Friedman, J.H.: Greedy function approximation: a gradient boosting machine. Annals of statistics pp. 1189-1232 (2001). doi.org/10.1214/aos/1013203451.

9. Fürnkranz, J., Widmer, G.: Incremental reduced error pruning. In: ICML. pp. 70-77 (1994). doi.org/10.1016/B978-1-55860-335-6.50017-9.

10. Hong J., Mozetic I., M.R.S.: Aq15: Incremental learning of attribute-based descriptions from examples, the method and user's guide. Reports of the Intelligent Systems Group (07 1986), hdl.handle.net/1920/1605.

11. Iyer, R.K., Bilmes, J.A.: Submodular optimization with submodular cover and submodular knapsack constraints. CoRR abs/1311.2106 (2013), arxiv.org/abs/1311.2106.

12. Jesus, S., Pombal, J., Alves, D., Cruz, A., Saleiro, P., Ribeiro, R.P., Gama, J., Bizarro, P.: Turning the Tables: Biased, Imbalanced, Dynamic Tabular Datasets for ML Evaluation. Advances in Neural Information Processing Systems (2022).

13. Kusters, R., Kim, Y., Collery, M., de Sainte Marie, C., Gupta, S.: Differentiable rule induction with learned relational features (2022). doi.org/10.48550/ARXIV.2201.06515.

14. Michalski, R.S.: Pattern recognition as rule-guided inductive inference. IEEE Transactions on Pattern Analysis and Machine Intelligence PAMI-2, 349-361 (1980), api.semanticscholar.org/ CorpusID:16719183.

15. Michalski, R.S., Mozeti, I., Hong, J., Lavra, N.: The multi-purpose incremental learning system aq15 and its testing application to three medical domains. In: AAAI Conference on Artificial Intelligence (1986), api.semanticscholar.org/-CorpusID:18018701.

16. Qiao, L., Wang, W., Lin, B.: Learning accurate and interpretable decision rule sets from neural networks. CoRR abs/2103.02826 (2021), arxiv.org/abs/2103.02826.

17. Quinlan, J.R.: Induction of decision trees. Machine Learning 1, 81-106 (1986). doi.org/10.1007/BF00116251.

18. Quinlan, J.R.: Learning logical definitions from relations. Machine Learning 5, 239-266 (1990), api.semanticscholar.org/CorpusID:6746439.

19. Quinlan, J.R.: C4.5: programs for machine learning. Morgan Kaufmann Publishers Inc., San Francisco, CA, USA (1993). doi.org/10.1007/BF00993309.

20. Tan, Y.S., Singh, C., Nasseri, K., Agarwal, A., Yu, B.: Fast interpretable Greedy-Tree Sums (FIGS). CoRR abs/2201.11931 (2022).

21. Mitchell, R., Frank, E.: Accelerating the XGBoost algorithm using GPU computing. PeerJ Computer Science 3 (2017): e127. doi.org/10.7717/peerj-cs.127.

## Claims

1. Computer-implemented method for generating and updating a rule-based classifier, for verification of data records of a dataset, each said data record corresponding to an event of a computer system, from an initial ruleset stored in a non-volatile memory of a data verification computer system, the method comprising the following steps:

   receiving a training dataset wherein the training dataset comprises a plurality of data records and, if existing, corresponding classification labels;
   splitting the training dataset into an induction dataset and a selection dataset;
   applying the initial ruleset to each of the plurality of data records of the induction dataset for classifying, when applicable, the data records;
   automatically generating a candidate ruleset from non-classified and labelled records; and
   applying the candidate ruleset to the selection dataset and iteratively selecting a rule from the candidate ruleset that provides the highest classification precision to the selection dataset, until a stopping criterium or criteria is reached.

2. Computer-implemented method according to the previous claim, wherein the stopping criterium or criteria comprises obtaining an alert rate or a false positive rate, FPR, of the selected rule set and stopping the iterative rule selection if the obtained rate surpasses a predetermined maximum rate.

3. Computer-implemented method according to any of the previous claims, wherein the automatic generation of the candidate ruleset from non-classified and labelled records comprises the following steps:

   generating one or more decision trees by a greedy iterative processing of deciding on a tree split of a current tree node by discarding samples that fall into support of said current tree node, or fall into support of a current best leaf of another tree; and
   converting the generated one or more decision trees into the candidate ruleset.

4. Computer-implemented method according to any of the previous claims, wherein the initial ruleset is previously automatically generated from an initial training dataset by:

   generating one or more decision trees by a greedy iterative processing of deciding on a tree split of a current tree node by discarding samples that fall into support of said current tree node, or fall into support of a current best leaf of another tree; and
   converting the generated one or more decision trees into the initial ruleset.

5. Computer-implemented method for generating and updating a rule-based classifier, for verification of data records of a dataset, each said data record corresponding to an event of a computer system, from an initial ruleset stored in a non-volatile memory of a data verification computer system, the method comprising the following steps:

   receiving a training dataset wherein the training dataset comprises a plurality of data records and, if existing, corresponding classification labels;
   splitting the received training dataset into a plurality of induction datasets and a selection dataset;
   applying the initial ruleset to each of the plurality of data records of each of the plurality of induction datasets for classifying, when applicable, the data records;
   automatically generating a candidate ruleset from non-classified and labelled records, for each induction dataset of the plurality of induction datasets;
   merging the generated candidate rulesets; and
   applying the merged candidate rulesets to the selection dataset and iteratively selecting a rule from the merged candidate rulesets that provides the highest classification precision to the selection dataset, until a stopping criterium or criteria is reached.

6. Computer-implemented method according to the previous claim, wherein said automatic generation of a candidate ruleset for each induction dataset is carried out in parallel by GPU or NPU parallel processing.

7. Computer-implemented method according to the previous claim, wherein said automatic generation is by decision tree generation carried out in parallel by GPU or NPU parallel processing.

8. Computer-implemented method according to any of the claims, wherein said applying the initial ruleset comprises an evaluation of rules comprised by said initial ruleset, said applying the candidate ruleset comprises an evaluation of rules comprised by said candidate ruleset; and
wherein said evaluation of the rules comprised by said initial ruleset is carried out in parallel, and/or said evaluation of the rules comprised by said candidate ruleset is carried out in parallel.

9. Computer-implemented method according to any of the previous claims, wherein said applying the candidate ruleset comprises an evaluation of rules comprised by said candidate ruleset, wherein said iterative rule selection from the candidate ruleset is carried out sequentially using cached evaluations of the candidate ruleset.

10. Computer-implemented method according to the previous claim, wherein said iterative rule selection from the candidate ruleset is carried out sequentially by CPU processing.

11. Computer-implemented method according to any of the claims 3-7, wherein the greedy iterative processing is based on "Fast interpretable Greedy-Tree Sums (FIGS)" by Tan, Y.S., Singh, C., Nasseri, K., Agarwal, A., Yu, B.:. CoRR abs/2201.11931 (2022) [20].

12. Computer-implemented method according to any of the previous claims, wherein the classification labels are binary.

13. Computer device comprising a hardware-based computer processor and a non-volatile memory comprising computer program instructions, which when executed by the hardware-based computer processor, cause the hardware-based computer processor to carry out the method of any of the previous claims.

14. Computer program product embodied in a non-transitory computer-readable medium comprising computer program instructions, which when executed by a computer processor, cause the computer processor to carry out the method of any of the claims 1-13.

**Fig. 1**

**Fig. 2**

**Fig. 3**

Europäisches
Patentamt
European
Patent Office
Office européen
des brevets

# EUROPEAN SEARCH REPORT

**Application Number**

EP 25 18 7952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Cohen William W: "Fast Effective Rule Induction", Machine Learning: Proceedings of the Twelfth International Conference, ICML95, 9 July 1995 (1995-07-09), XP093328240, Retrieved from the Internet: URL:https://crystal.uta.edu/~gonzalez/ml/Ripper.pdf [retrieved on 2025-10-23] * abstract * * page 1 - page 9 * ----- | 1-14 | INV. G06N5/01 G06N5/025 G06N20/00 |
| A | BARBADO ALBERTO ET AL: "Rule extraction in unsupervised anomaly detection for model explainability: Application to OneClass SVM", EXPERT SYSTEMS WITH APPLICATIONS, ELSEVIER, AMSTERDAM, NL, vol. 189, 23 October 2021 (2021-10-23), XP086876311, ISSN: 0957-4174, DOI: 10.1016/J.ESWA.2021.116100 [retrieved on 2021-10-23] * the whole document * ----- | 1-14 | TECHNICAL FIELDS SEARCHED (IPC) G06N |

The present search report has been drawn up for all claims

| Place of search | Date of completion of the search | Examiner |
|---|---|---|
| The Hague | 24 October 2025 | Tsakonas, Athanasios |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAN, Y.S.** ; **SINGH, C.** ; **NASSERI, K.** ; **AGARWAL, A.** ; **YU, B.** Fast interpretable Greedy-Tree Sums (FIGS). *CoRR abs/2201.11931*, 2022
- **APARÍCIO, D.** ; **BARATA, R.** ; **BRAVO, J.** ; **ASCENSÃO, J.T.** ; **BIZARRO, P.** ARMS: automated rules management system for fraud detection. *CoRR abs/2002.06075*, 2020
- **BACHE, K.** ; **LICHMAN, M.** *UCI machine learning repository*, 2013, http://archive.ics.uci.edu/ml
- **BREIMAN, L.** Random forests. *Machine Learning*, October 2001, vol. 45 (1), 5-32
- **BREIMAN, L.** ; **FRIEDMAN, J.H.** ; **OLSHEN, R.A.** ; **STONE, C.J.** Classification and Regression Trees. *Wadsworth*, 1984, lyle.smu.edu/~mhd/8331f06/cart.pdf
- **CENDROWSKA, J.** Prism: An algorithm for inducing modular rules. *International Journal of Man-Machine Studies*, 1987, vol. 27 (4), 349-370
- **CLARK, P.** ; **NIBLETT, T.** The cn2 induction algorithm. *Machine Learning*, 1989, vol. 3, 261-283
- Fast effective rule induction. **COHEN, W.W.** Machine Learning Proceedings. 1995, 115-123
- **FRIEDMAN, J.H.** Greedy function approximation: a gradient boosting machine. *Annals of statistics*, 2001, 1189-1232
- **FÜRNKRANZ, J.** ; **WIDMER, G.** Incremental reduced error pruning. *ICML*, 1994, 70-77
- **HONG J.** ; **MOZETIC I., M.R.S.** Aq15: Incremental learning of attribute-based descriptions from examples, the method and user's guide. *Reports of the Intelligent Systems Group*, July 1986
- **LYER, R.K.** ; **BILMES, J.A.** Submodular optimization with submodular cover and submodular knapsack constraints. *CoRR abs/1311.2106*, 2013

- **JESUS, S.** ; **POMBAL, J.** ; **ALVES, D.** ; **CRUZ, A.** ; **SALEIRO, P.** ; **RIBEIRO, R.P.** ; **GAMA, J.** ; **BIZARRO, P.** Turning the Tables: Biased, Imbalanced, Dynamic Tabular Datasets for ML Evaluation. *Advances in Neural Information Processing Systems*, 2022
- **KUSTERS, R.** ; **KIM, Y.** ; **COLLERY, M.** ; **DE SAINTE MARIE, C.** ; **GUPTA, S.** *Differentiable rule induction with learned relational features*, 2022
- **MICHALSKI, R.S.** Pattern recognition as rule-guided inductive inference. *IEEE Transactions on Pattern Analysis and Machine Intelligence PAMI-2*, 1980, 349-361
- **MICHALSKI, R.S.** ; **MOZETI, I.** ; **HONG, J.** ; **LAVRA, N.** The multi-purpose incremental learning system aq15 and its testing application to three medical domains. *AAAI Conference on Artificial Intelligence*, 1986
- **QIAO, L.** ; **WANG, W.** ; **LIN, B.** Learning accurate and interpretable decision rule sets from neural networks. *CoRR abs/2103.02826*, 2021, arxiv.org/abs/2103.02826
- **QUINLAN, J.R.** Induction of decision trees. *Machine Learning*, 1986, vol. 1, 81-106
- **QUINLAN, J.R.** Learning logical definitions from relations. *Machine Learning*, 1990, vol. 5, 239-266
- **QUINLAN, J.R.** C4.5: programs for machine learning. Morgan Kaufmann Publishers Inc., 1993
- **MITCHELL, R.** ; **FRANK, E.** Accelerating the XGBoost algorithm using GPU computing. *PeerJ Computer Science*, 2017, vol. 3, e127